# EUROPEAN PATENT SPECIFICATION

(11) **EP 2 108 202 B1**
(45) Date of publication and mention of the grant of the patent: **08.03.2017**
(21) Application number: 08704811.2
(22) Date of filing: 16.01.2008
(51) Int. Cl.: H01M 4/02, H01M 4/13, H01M 4/36, H01M 4/525, H01M 4/58, H01M 4/62, H01M 10/0525

(54) **A SECONDARY BATTERY WITH IMPROVED SAFETY**
SEKUNDÄRBATTERIE MIT VERBESSERTER SICHERHEIT
BATTERIE SECONDAIRE À SÉCURITÉ AMÉLIORÉE

(30) Priority: 24.01.2007 KR 20070007406
(43) Date of publication of application: 14.10.2009
(73) Proprietor: LG Chem, Ltd., Youngdungpo-gu, Seoul 150-721 (KR)
(72) Inventor: PARK, Pil-Kyu, Daejeon 301-211 (KR); PARK, Young-Sun, Chungcheongbuk-do 363-761 (KR); OH, Byung-Hun, Daejeon 302-120 (KR); KIM, Ki-Tae, Daejeon 305-390 (KR); LEE, Myoung-Hun, Gyeonggi-do 463-761 (KR); LEE, Jae-Won, LG Chem Reasearch Park, Daejeon 305-380 (KR)
(74) Representative: Hoffmann Eitle
(86) International application number: PCT/KR2008/000275
(87) International publication number: WO 2008/091074

(56) References cited:
- EP-A2- 1 150 368
- WO-A1-2008/088180
- WO-A2-2006/027925
- JP-A- 2001 110 414
- JP-A- 2002 279 989
- KR-A- 20040 003 738

## Description

### Technical Field

The present invention relates to a secondary battery in which, when a short circuit occurs, the instantaneous flow of large amounts of electrons and lithium ions can be suppressed, thus ensuring excellent safety of the battery.

### Background Art

Recently, the compact and lightweight construction of electronic equipment has been realized and the use of portable electronic devices has been generalized. Thus, studies on secondary batteries having high energy density have been actively conducted. Lithium secondary batteries comprise cathode and anode electrodes made of materials capable of intercalating and deintercalating lithium ions, are fabricated by injecting an organic electrolyte or a polymer electrolyte between the cathode and the anode, and produce electrical energy by oxidation and reduction reactions, which occur when lithium ions are intercalated into and deintercalated from the cathode and anode electrodes.

Currently, as a cathode active material for lithium secondary batteries, lithium-containing metal composite oxide (e.g., LiCoO₂) having high potential versus lithium (Li/Li⁺) is mainly used, and as an anode active material, a carbon material is mainly used, in order to realize high-capacity and high-output batteries. However, in the case where the above-described cathode active material having high potential versus lithium is used alone, when a short circuit occurs in the battery due to internal or external conditions, electrons and lithium ions will rapidly migrate from the anode to the cathode, and thus a large amount of current will instantaneously flow, which leads to rapid heat generation in the battery, thus causing problems such as battery ignition and explosion.
EP 1150368 is directed to a lithium ion cell which is said to be improved appreciably in operational stability under special conditions, such as high temperatures, and exhibits superior characteristics against over-discharging, while guaranteeing compatibility to the operating voltage of a conventional lithium ion cell and an energy density equivalent to that of the conventional lithium ion cell. To this end, the lithium ion cell includes a positive electrode, a negative electrode and a non-aqueous electrolyte, and uses, as a positive electrode active material, a composite material of a first lithium compound represented by the general formula LiₓM_{y}PO₄, where 0 <x< 2, 0.8 <y< 1.2 and M contains Fe, and a second lithium compound having a potential higher than the potential of the first lithium compound.
WO 2006/027925 describes a positive electrode, material for use in a non-aqueous electrolyte lithium-ion secondary battery is configured by attaching a lithium compound to the surfaces of particles of a lithium nickel cobalt manganese oxide. This configuration results in imparting exalted durability to the non-aqueous electrolyte lithium-ion secondary battery.
WO 2008/088180 represents post-published prior art under Article 54(3) EPC and concerns a cathode active material, which includes (a) a first lithium-containing metal composite oxide and (b) a second lithium-containing metal composite oxide coated on an entire particle surface of the first lithium-containing metal composite oxide, the second lithium-containing metal composite oxide having a higher resistance and a lower potential vs. lithium potential than the first lithium-containing metal composite oxide. In the disclosed cathode active material, an entire surface of a first lithium-containing metal composite oxide is coated with a second lithium-containing metal composite oxide having a high resistance value and a low potential vs. lithium potential. Therefore, during an internal short of a secondary battery, it is possible to slow down the moving rate of a large amount of lithium ions and electrons from an anode to a cathode, and thus to prevent heat generation caused by the occurrence of temporary overcurrent. Also, it is possible to increase the temperature where a cathode active material is decomposed and gas is generated, and to improve thermal stability by inhibiting side reactions of the cathode active material and electrolyte.

### Disclosure of Invention

### Technical Problem

The present inventors have found that if a cathode for a battery comprises two or more cathode active materials having different potentials versus (Li/Li⁺) and different impedances, that is, if the cathode comprises a first cathode active material having high potential versus lithium, and a second cathode active material having low potential versus lithium and high impedance, compared to those of the first cathode active material, the migration rate of large amounts of lithium ions and electrons, which are transferred from the anode to the cathode when a short circuit occurs in the battery, can be reduced. As a result, the generation of heat caused by the generation of instantaneous overcurrent can be suppressed, thus improving the safety of the battery.

Accordingly, it is an object of the present invention to provide a cathode comprising two or more cathode active materials having different potentials versus lithium and different impedances, and a secondary battery having improved safety, which comprises said cathode.

### Technical Solution

The present invention provides a cathode comprising two or more lithium-containing metal composite oxides, having different potentials versus lithium (Li/Li⁺) and different impedances, the cathode, comprising:
(a) a first lithium-containing metal composite oxide; and
(b) a second lithium-containing metal composite oxide, which has high impedance and low potential versus lithium (Li/Li⁺), compared to those of the first lithium-containing metal composite oxide,
wherein the cathode has a structure in which the first lithium-containing metal composite oxide and the second lithium-containing metal composite oxide in the cathode are uniformly mixed with each other;
the second lithium-containing metal composite oxide is coated with a conductive material on part or all of the surface thereof;
wherein the second lithium containing metal composite oxide is LiFePO₄; and
wherein the electrical conductivity ratio between the first lithium-containing metal composite oxide and the second lithium-containing metal composite oxide is in a range of 10⁻¹ to 10⁻⁷.

Hereinafter, the present invention will be described in further detail.

The present invention is characterized in that two or more lithium-containing metal composite oxides having different potentials versus lithium (Li/Li⁺) and different impedances, are used in combination as cathode components.

In the prior art, cathode active materials having different potentials versus lithium (Li/Li⁺) were sometimes used in combination as cathode components for lithium secondary batteries. In this case, it was a main object to control the discharge potential of the cathode to a specific range. Thus, when a battery comprising this cathode was short-circuited due to external or internal conditions, the instantaneous flow of a large amount of current from the anode to the cathode could not be suppressed because the electrical conductivity (i.e., impedance difference) between the cathode active materials used in combination was not suitably considered. As a result, the rapid ignition and explosion of the battery occurred.

In comparison with this, the present invention is characterized in that lithium-containing metal composite oxides having different potentials versus lithium and different impedances, as defined above, are used in combination as cathode componets.

When this cathode of the present invention is used, the instantaneous migration of a large amount of lithium ions and electrons from the anode to the cathode, which is created when a short circuit occurs in the battery, is significantly reduced. Thus, the cathode of the present invention can significantly reduce the accumulation of heat in a battery caused by high current rate, thus suppressing the rapid ignition and explosion of the battery.

Also, because the first lithium-containing metal composite oxide and the second lithium-containing metal composite oxide are cathode active materials which absorb and release lithium, these oxides do not substantially cause problems of reduction in battery performance, for example, reduction in battery capacity and cycle life characteristics, which can arise in the use of the conventional electrode additives which are electrochemically irreversible.

### <Positive electrode>

The cathode of the present invention has the constitution as defined above.

In the cathode, the first lithium-containing metal composite oxide having a relatively high potential acts as a main cathode active material, in which an electrochemical reaction causing the charge and discharge of a battery mainly occurs. In comparison with this, the second lithium-containing metal composite oxide serves to increase impedance in a cell in abuse conditions so as to prevent a large amount of current from flowing from the anode to the cathode when a short circuit occurs in the battery.

There is no particular limitation on the range of the difference in potential versus lithium between the first lithium-containing metal composite oxide and the second lithium-containing metal composite oxide. The first lithium-containing metal composite oxide preferably has a potential versus lithium (Li/Li⁺) above 3.7V, such that the redox reaction of the first lithium-containing metal composite oxide can occur at a relatively high potential. Also, the potential versus lithium (Li/Li⁺) of the second lithium-containing metal composite oxide is preferably below 3.7V, which is lower than that of the first lithium-containing metal composite oxide. Herein, the difference (ΔP) in potential versus lithium (Li/Li⁺) is preferably in the range of 0.3V < ΔP < 5V, but the scope of the present invention is not limited thereto.

Also, the impedance ratio between the first lithium-containing metal composite oxide and the second lithium-containing metal composite oxide is the electrical conductivity ratio between the composite oxides and can be referred to as "the electrical conductivity (S/cm) of the second lithium-containing metal composite oxide / the electrical conductivity (S/cm) of the first lithium-containing metal composite oxide". Herein, the impedance ratio may be in the range of 10⁻¹ to 10⁻⁷. When the battery performance is considered, the difference in impedance between the first lithium-containing metal composite oxide and the second lithium-containing metal composite oxide is preferably in the range of 10⁻² to 10⁻³.

Meanwhile, when the difference in electrical conductivity between the first lithium-containing metal composite oxide and the second lithium-containing metal composite oxide is great, the surface of the second lithium-containing metal composite oxide may also be coated with a highly conductive material, for example, a carbon material, in order to impart the above-described impedance ratio.

Non-limiting examples of first lithium-containing metal composite oxides, which can be used in the present invention, include LiMO₂ (M = Co, Mn, Ni, Ni_{1/3}Co_{1/3}Mn_{1/3}, Cr, or V), LiMO₄ (M = CoMn, NiV, CoV, CoP, MnP, NiP, or Mn₂), and mixtures thereof. The second lithium containing metal composite oxide is LiFePO₄.

In order to construct this cathode structure, the specific surface areas, sizes, amounts of use, and the like, of the first lithium-containing metal composite oxide and the second lithium-containing metal composite oxide, should be controlled. For this purpose, in the present invention, the cathode is constructed by suitably controlling the surface area, size, amount of use, etc., of the second lithium-containing metal composite oxide, in the conventional ranges known in the art.

For example, the amount of the second lithium-containing metal composite oxide (assumed to have a particle size of about 5 *µ*m) required to cover the first lithium-containing metal composite oxide particles having a particle size of about 20 *µ*m is about 20 wt% based on the first lithium-containing metal composite oxide. Herein, if the particle size of the second lithium-containing metal composite oxide is reduced to 2.5 *µ*m, the second lithium-containing metal composite oxide can sufficiently cover the first lithium-containing metal composite oxide, even when the amount of addition thereof is 7.5 wt%.

The use ratio (weight ratio) between the first lithium-containing metal composite oxide and the second lithium-containing metal composite oxide is preferably in the range of 70-95 : 5-30, but the scope of the present invention is not limited thereto. If the weight ratio therebetween is lower than the lower limit of the above-specified range, the electrochemical performance of the cathode can be reduced, and if it exceeds the upper limit of the above-specified range, the oxides cannot sufficiently act as resistance, making it difficult to achieve the effect of improving battery safety.

However, as the difference in specific surface area between the first lithium-containing metal composite oxide and the second lithium-containing metal composite oxide increases, the same effect can be exhibited, even if the weight ratio therebetween is low.

In order to cover the surface of the first lithium-containing metal composite oxide with the second lithium-containing metal composite oxide, the particle size of the first lithium-containing metal composite oxide particles is preferably in the range of 5-20 *µ*m, and the particle size of the second lithium-containing metal composite oxide particles is preferably less than 10 *µ*m. More preferably, the particle size of the second lithium-containing metal composite oxide particles ranges from 50 nm to 10 *µ*m. However, the particle size of the first lithium-containing metal composite oxide particles should be larger than that of the second lithium-containing metal composite oxide particles, such that the cathode having the above-described structure can be constructed.

Furthermore, the specific surface area of the first lithium-containing metal composite oxide particles is less than 0.2 m²/g, and preferably in the range of 0.01-0.2 m²/g. Also, the specific surface area of the second lithium-containing metal composite oxide particles is preferably in the range of 0.5-30 m²/g. However, the scope of the present invention is not limited to the above-specified ranges.

For example, when LiCoO₂ is used as the first lithium-containing metal composite oxide, it may have a particle size of 10-20 *µ*m, a conductivity of about 10⁻² S/cm and a specific surface area of about 0.2 m²/g. As the second lithium-containing metal composite oxide corresponding thereto, LiMnO₄, Li(Ni_{1/3}Mn_{1/3}Co_{1/3})O₂, LiFePO₄ or the like may be used. Herein, Li(Ni_{1/3}Mn_{1/3}Co_{1/3})O₂ may have a particle size of about 10 *µ*m, a conductivity ranging from 10⁻³ to 10⁻⁴, and a specific surface area of about 0.5-1.2 m²/ g. Such Li(Ni_{1/3}Mn_{1/3}Co_{1/3})O₂ can provide the effects of preventing the reduction in battery performance and improving battery safety when it is added in an amount of more than 50 wt% based on 100 wt% of the cathode active material.

LiFePO₄, which is used as the second lithium containing metal composite oxide, may have a particle size of 0.5-5 *µ*m, and a specific surface area of about 13 m²/g. Herein, since part or all of the surface of LiFePO₄ as the second lithium-containing metal composite oxide is coated with a carbon material, the conductivity thereof can be increased to the range of 10⁻²-10⁻³.

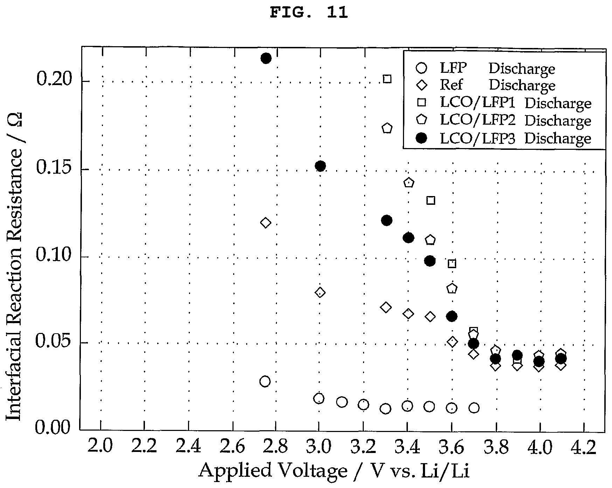

With respect to the cathode constructed as described above, when a battery is discharged at a high current rate (for example, 5C or more) due to a short circuit, lithium ions and/or electrons, which migrate from the anode to the cathode, will tend to enter the first lithium-containing metal composite oxide having a relatively high potential and a relatively low impedance. However, because the first lithium-containing metal composite oxide is either mixed with the second lithium-containing metal composite oxide having low potential versus lithium (Li/Li⁺) and high impedance, the migration of lithium ions and electrons will be interfered with (that is, impedance will be increased), and the interfacial resistance is increased (see FIG. 11). Thus, the migration rate of large amounts of lithium ions and electrons from the anode to the cathode can be markedly reduced, thus improving the safety of the battery.

It is of note that when a battery is normally discharged, the first lithium-containing metal composite oxide having high potential versus lithium will first be reduced to metal, regardless of the difference in impedance between the first lithium-containing metal composite oxide and the second lithium-containing metal composite oxide, but when a short circuit occurs in a battery to rapidly increase current rate, the difference in impedance between the first lithium-containing metal composite oxide and the second lithium-containing metal composite oxide will act as a main factor in the electrochemical reaction of the battery.

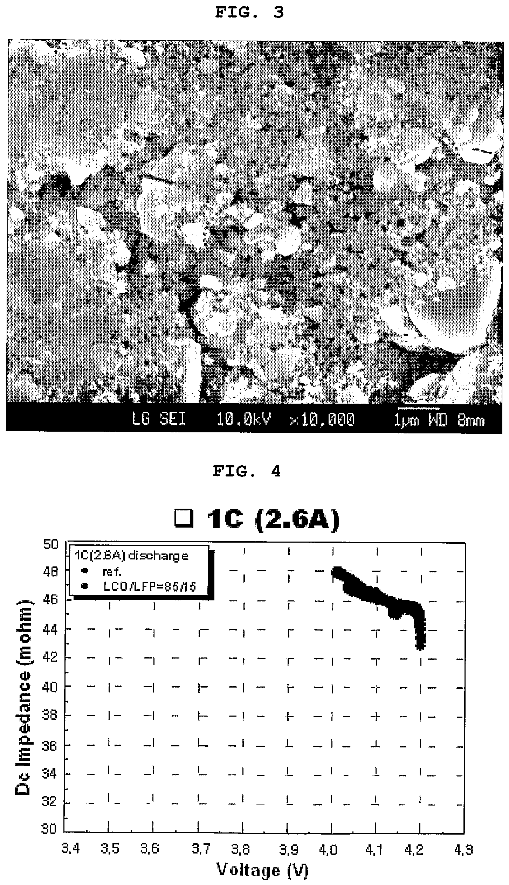

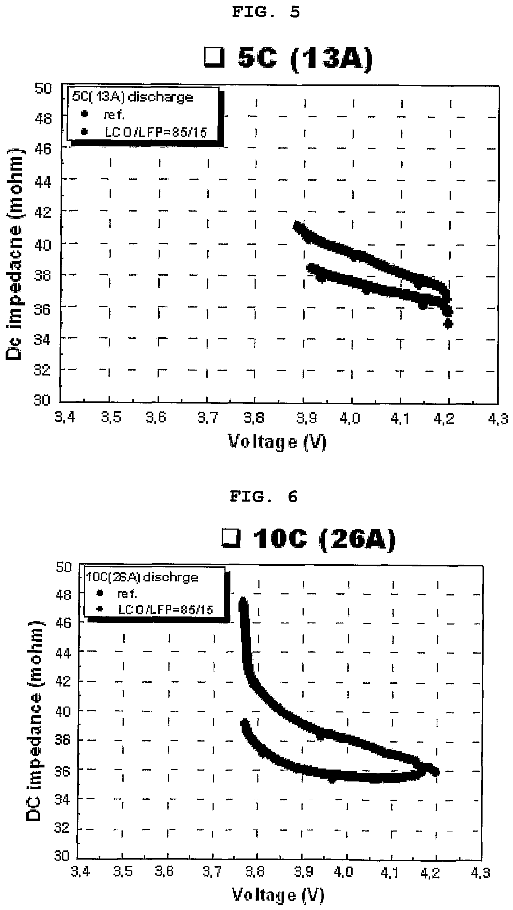

That is, in the cathode comprising a mixture of a cathode active material having low impedance (first lithium-containing metal composite oxide) with a cathode active material having high impedance (second lithium-containing metal composite oxide), when electrons and lithium ions migrate from the anode directly to the cathode without passing through an external circuit due to the internal short circuit of the battery, the migration rate will be significantly reduced due to the cathode active material having high impedance. In fact, it could be seen through test examples of the present invention that in a normal operation, the first lithium-containing metal composite oxide and the second lithium-containing metal composite oxide did not show a difference in impedance therebetween, but when the current rate was rapidly increased, the difference in impedance therebetween was significantly increased (see FIGS. 4 to 8). Thus, it can be predicted that the migration rate of large amounts of electrons and lithium ions from the anode to the cathode is reduced due to the difference in impedance between the first and second lithium-containing metal composite oxides, so that heat generation caused by the generation of instantaneous overcurrent is prevented, and thus the safety of the battery is improved.

The current rate range in which the difference in impedance between the first and second lithium-containing metal composite oxides is significantly increased is not specifically limited, but may be, for example, 5C or more.

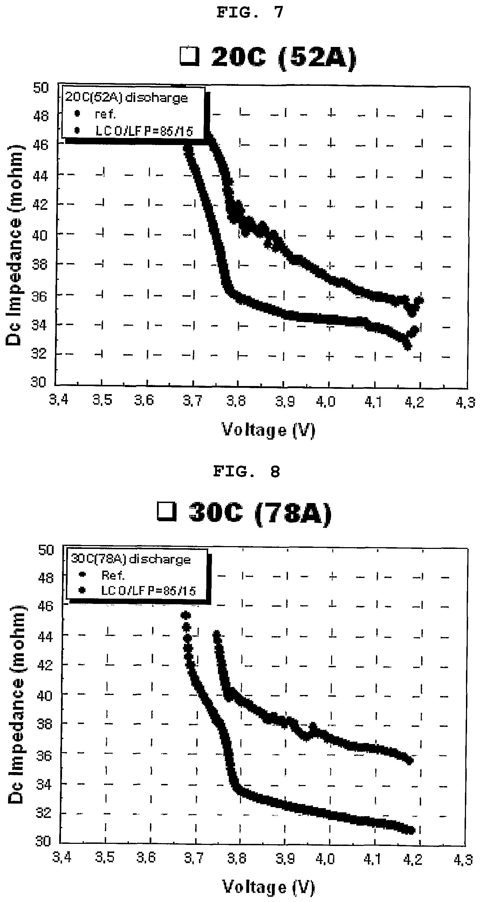

Meanwhile, in the inventive cathode constructed as described above, the first lithium-containing metal composite oxide having a high potential versus lithium and a low impedance is first initiated during normal discharge of the battery, and then the discharge of the second lithium-containing metal composite oxide occurs below 3.7V. As a result, at a given current or less, the inventive cathode is not greatly different from the case in which a single active material is used. Particularly, in the normal operation range, the inventive cathode has little or no difference in impedance from the case in which the first lithium-containing metal composite oxide, having high potential versus lithium and low impedance, is used alone (see FIGS. 4 and 8).

Furthermore, although the inventive cathode can show a reduction in capacity per volume compared to a cathode comprising a single cathode active material, the packing density of the first and second lithium-containing metal composite oxides can be increased because the particle size of the second lithium-containing metal composite oxide is small compared to that of the first lithium-containing metal composite oxide. Thus, the reduction in battery performance, caused by the use of the first lithium-containing metal composite oxide together with the second lithium-containing metal composite oxide can be minimized.

A method for fabricating the cathode according to the present invention is not specifically limited and can be carried out using any conventional method known in the art. In one embodiment, the cathode of the present invention is fabricated by applying, on a current collector, a cathode slurry comprising the first and second lithium-containing metal composite oxides, and then drying the applied slurry. In this case, a small amount of a conductive agent and/or a binder may be added.

The present invention provides a secondary battery, comprising: a cathode comprising two or more lithium-containing metal composite oxides having different potentials versus lithium and different impedances; an anode; an electrolyte; and a separator.

In the secondary battery provided according to the present invention, the migration rate of lithium ions and electrons, which are rapidly transferred from the anode to the cathode when a short circuit occurs in the battery, can be reduced, so that rapid heat generation in the battery can be suppressed, thus preventing the ignition and explosion of the battery.

The secondary battery is preferably a lithium secondary battery, non-limiting examples of which include lithium metal secondary batteries, lithium ion secondary batteries, lithium polymer secondary batteries and lithium ion polymer secondary batteries.

The secondary battery of the present invention can be fabricated according to a conventional method known in the art by interposing a porous separator between the cathode and the anode and placing the electrolyte into the resulting structure.

The anode, the separator and the electrolyte, which are to be used together with the cathode of the present invention, are not specifically limited and may be those conventionally used in prior electrochemical devices.

In addition, although the shape of the secondary battery fabricated according to the above method is not limited to any particular shape, it can have a cylindrical shape, a polygonal shape, a pouch shape or a coin shape.

In another aspect, the present invention provides a method for fabricating a lithium secondary battery in which the migration rate of large amounts of lithium ions and electrons, which are rapidly transferred from an anode to a cathode when a short circuit occurs in the battery, is reduced, the battery comprising the cathode, comprising: (a) a first lithium-containing metal composite oxide; and (b) a second lithium-containing metal composite oxide, which has a high impedance and low potential versus lithium (Li/Li⁺) compared to those of the first lithium-containing metal composite oxide.

Herein, the effect of reducing the migration rate of large amounts of lithium ions and electrons when a short circuit occurs in the lithium secondary battery, and therefore, the effect of preventing the generation of heat in the battery, is the same as described above, and thus will be omitted herein.

### Brief Description of the Drawings

FIG. 1 is a structural view showing one embodiment of a cathode according to the present invention.
FIG. 2 is an electron microscope photograph of lithium cobalt oxide (LiCoO₂) particles (mean particle size: 20 *µ*m).
FIG. 3 is an electron microscope photograph of an electrode, comprising LiCoO₂ (mean particle size: 5-20 *µ*m) and LiFePO₄ (mean particle size: 50-500 nm) as a first lithium-containing metal composite oxide and a second lithium-containing metal composite oxide, respectively.
FIG. 4 is a graphic diagram showing the change in DC impedance at various discharge currents in each of a battery of Example 2 and a battery of Comparative Example 1, after being charged at 1C.
FIG. 5 is a graphic diagram showing the change in DC impedance at various discharge currents in each of a battery of Example 2 and a battery of Comparative Example 1, after being charged at 5C.
FIG. 6 is a graphic diagram showing the change in DC impedance at various discharge currents in each of a battery of Example 2 and a battery of Comparative Example 1, after being charged at 10C.
FIG. 7 is a graphic diagram showing the change in DC impedance at various discharge currents in each of a battery of Example 2 and a battery of Comparative Example 1, after being charged at 20C.
FIG. 8 is a graphic diagram showing the change in DC impedance at various discharge currents in each of a battery of Example 2 and a battery of Comparative Example 1, after being charged at 30C.

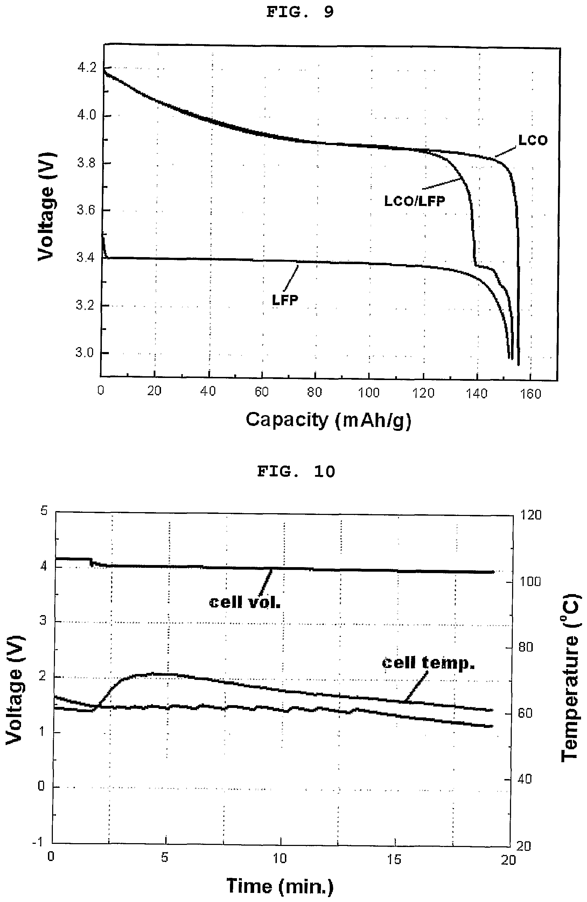

FIG. 9 is a graphic diagram showing the discharge voltages of batteries, which comprise, as a cathode active material, each of LiCoO₂ (LCO), LiFePO₄ (LFP) and a mixture of LCO and LFP.
FIG. 10 is a graphic diagram showing the results of a nail penetration test (60 °C, 4.3 V and 0.3 m/min) on a battery of Example 4, comprising the cathode according to the present invention.
FIG. 11 is a graphic diagram showing the change in the interfacial reaction resistance (EIS) of batteries at various applied voltages.

### Mode for the Invention

Hereinafter, the present invention will be described in further detail with reference to examples and comparative examples. It is to be understood, however, that these examples are for illustrative purposes only, and the scope of the present invention is not limited thereto.

### Example 1

LiCoO₂ (conductivity: 10⁻² S/cm; specific surface area: 0.2 m²/g; D₅₀ = 5-20 *µ*m; potential versus Li/Li⁺ = 3.8-4.2V) as a first lithium-containing metal composite oxide, and LiFePO₄ (conductivity: 10⁻² to 10⁻⁴ S/cm (for carbon-coated LFP); specific surface area: 13 m²/g; D₅₀ = 0.5-5 *µ*m; Li/Li⁺ = 3.4-3.5V; ΔP = 0.3-0.8V) as a second lithium-containing metal composite oxide were mixed with each other at a weight ratio of 80 : 20. The oxide mixture, a conductive agent and a binder were added to NMP (N-methyl-2-pyrrolidone) to prepare a cathode slurry. The slurry was then coated on an aluminum (Al) collector, thus fabricating a cathode.

A graphite material as an anode active material, and a binder, were added to NMP to prepare an anode slurry. The anode slurry was then coated on a copper (Cu) collector, thus fabricating an anode.

As an electrolyte, a solution of 1M LiPF₆ in EC/EMC (1:2 v/v) was used. A polyolefin-based separator was interposed between the fabricated cathode and anode, and then the electrolyte was injected into the resulting assembly, thus fabricating a battery.

The surface of the fabricated cathode was examined, and as a result, it could be seen that the LiFePO₄ particles were placed around the LiCoO₂ particles (see FIG. 3).

### Example 2

A battery was fabricated in the same manner as in Example 1, except that LiCoO₂ and LiFePO₄ were used at a weight ratio of 85 : 15 instead of 80 : 20.

### Example 3

A battery was fabricated in the same manner as in Example 1, except that LiCoO₂ and LiFePO₄ were used at a weight ratio of 90 : 10 instead of 80 : 20.

### Example 4

A battery was fabricated in the same manner as in Example 1, except that LiCoO₂ and LiFePO₄ were used at a weight ratio of 92.5 : 7.5 instead of 80 : 20.

### Example 5

A battery was fabricated in the same manner as in Example 1, except that LiCoO₂ and LiFePO₄ were used at a weight ratio of 95 : 5 instead of 80 : 20.

### Example 6

A battery was fabricated in the same manner as in Example 1, except that Li(Ni_{1/3}Mn _{1/3}Co_{1/3})O₂ (conductivity: 10⁻³; specific surface area: 0.25 m²/g; particle size: 10 *µ*m; potential versus Li/Li⁺ = 3.8-4.2V) and LiFePO₄ (conductivity: 10⁻² to 10⁻⁴ S/cm (for carbon-coated LFP); specific surface area: 13 m²/g; D₅₀ = 0.5-5 *µ*m; Li/Li⁺ = 3.4-3.5V; ΔP = 0.3-0.8V) were used as the first cathode active material and the second cathode active material, respectively.

### Comparative Example 1

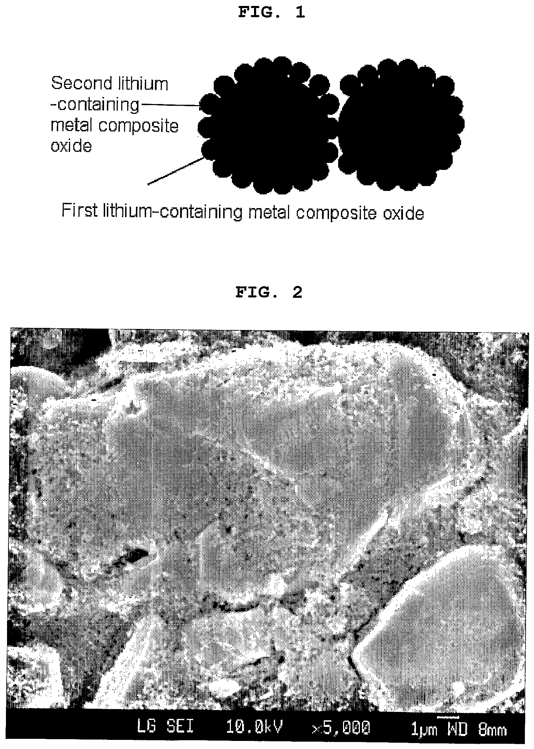

A battery was fabricated in the same manner as in Example 1, except that LiCoO₂ was used alone as the cathode active material. The surface structure of the fabricated cathode is shown in FIG. 2.

### Comparative Example 2

A battery was fabricated in the same manner as in Example 1, except that LiCoO ₂ and LiNi_{0.9}Co_{0.1}O₂ (difference in potential versus Li/Li⁺from LCO = -0.2∼0.5V; conductivity: 10⁻²; specific surface area: 0.4 m²/g; particle size: 10 *µ*m) were used as the first cathode active material and the second cathode active material, respectively. The differences in potential and impedance between the cathode active materials are shown in Table 1 below.

When the secondary battery fabricated in Comparative Example 2 was used, the safety of the battery could not be improved because there was no difference in impedance between the cathode active materials.

### Comparative Example 3

A battery was fabricated in the same manner as in Example 1, except that LiCoO₂ and Li(Ni_{1/3}Mn_{1/3}Co_{1/3})O₂ (difference in potential from LCO: very small; conductivity: 10⁻³; specific surface area: 0.25 m²/g; particle size: 10 *µ*m) were as the first cathode active material and the second cathode active material, respectively. The differences in potential and impedance between the cathode active materials are shown in Table 1 below.

The safety of the secondary battery fabricated in Comparative Example 2 could be improved only when the amount of addition of Li(Ni_{1/3}Mn_{1/3}Co_{1/3})O₂ used as the second cathode active material was more than 50 wt% based on the total weight of the cathode active materials.

Table 1

**[Table 1]**

| | First cathode active material | Second cathode active material | Potential difference (ΔP) |
|---|---|---|---|
| | (potential, impedance, specific surface area and particle size) | | |
| Example 1 | LiCoO₂ | LiFePO₄ | ΔP: 0.3 to 0.8V |
| Example 2 | - Li/Li⁺ : 3.8 to 4.2V | - Li/Li⁺: 3.4 to 3.5V | |
| Example 3 | | | |
| Example 4 | - impedance: 10⁻² | -impedance: 10⁻² to 10⁻⁴ | |
| Example 5 | - specific surface area: 0.2m²/g | - specific surface area: 13m²/g | |
| | - particle size: 10-20 *µ*m | - particle size: 2*µ*m | |
| Example 6 | Li(Ni_{1/3}Mn_{1/3}Co_{1/3})O₂ | | |
| | - Li/Li⁺ = 3.8 to 4.2V | | |
| | - impedance: 10⁻³, | | |
| | - specific surface area: 0.25m²/g, | | |
| | - particle size: 10 *µ*m | | |
| Comparative Example 1 | LiCoO₂ | - | - |
| | - Li/Li⁺: 3.8 to 4.2V | | |
| Comparative Example 2 | - impendance: 10⁻² | LiNi_{0.9}Co_{0.1}O₂ | ΔP: -0.2 to 0.5V |
| | - specific surface area: | - Li/Li⁺: 3.7 to 4.0 V | |
| | 0.2m²/g | - impedance: 10⁻² | |
| | - particle size: 10-20 *µ*m | - specific surface area: 0.4 m²/g | |
| | | -particle size: 10 *µ*m | |
| Comparative Example 3 | | Li(Ni_{1/3}Mn_{1/3}Co_{1/3})O₂ | ΔP: 0V |
| | | - Li/Li⁺: 3.8 to 4.2V | |
| | | - impedance: 10⁻³ | |
| | | - specific surface area: | |
| | | 0.25m²/g | |
| | | - particle size: 10 *µ*m | |

### Test Example 1: Evaluation of battery safety

The secondary batteries comprising the inventive cathode, comprising two or more cathode active materials having different potentials versus lithium and different impedances, were subjected to nail penetration (60 °C, 4.3V and 0.3 m/min).

The secondary batteries of Examples 1 to 5 were tested, and the batteries of Comparative Examples 1 to 3, comprising the single cathode active material, were used as a control group. The test results are shown in Table 2 below.

The test results showed that, in the case of the batteries of Comparative Examples 1 to 3, a short circuit occurred in the batteries due to nail penetration, leading to battery ignition, whereas, in the case of the batteries of Examples 1 to 5, ignition and explosion did not occurs, and the battery safety was maintained (see Table 2). This demonstrates that even when an internal short circuit occurs in the battery of the present invention due to external impact, the instantaneous migration of large amounts of lithium ions and electrons from the anode to the cathode is significantly reduced, and the accumulation of heat in the batteries, caused by a large amount of electric current, is suppressed, so that the rapid ignition and explosion of the battery is suppressed.

Table 2

**[Table 2]**

| | 0.3 m/min | 1 m/min | 3 m/min |
|---|---|---|---|
| Example 1 | Pass (0/3) | Pass (0/3) | P ass (0/3) |
| Example 2 | Pass (0/3) | Pass (0/3) | P ass (0/3) |
| Example 3 | Pass (0/3) | Pass (0/3) | Pass (0/3) |
| Example 4 | Pass (0/3) | Pass (0/3) | Pass (0/3) |
| Example 5 | Pass (0/3) | Pass (0/3) | Pass (0/3) |
| Example 6 | Pass (0/3) | Pass (0/3) | Pass (0/3) |
| Comparative Example 1 | Fail (3/3) | Fail (3/3) | Fail (3/3) |
| Comparative Example 2 | Fail (3/3) | Fail (3/3) | Fail (3/3) |
| Comparative Example 3 | Fail (3/3) | Fail (3/3) | Fail (3/3) |

### Test Example 2: Evaluation of battery impedance

The secondary battery comprising the inventive cathode, comprising two or more cathode active materials, having different potentials versus lithium and different impedances, was measured for impedance.

Both the secondary battery of Example 2 and the battery of Comparative Example 1 as a control group were measured for DC impedance at various current rates of 1C, 5C, 10C, 20C and 30C.

The test results showed that the difference in impedance between LCO and LFP was increased as the discharge current rate was increased (see FIGS. 4 to 8). This indirectly suggests that LFP as the second lithium-containing metal composite oxide acts as resistance during the battery discharge process.

Meanwhile, an EIS (Electrochemical Impedance Spectroscopy) test was performed on the inventive secondary battery, comprising two or more cathode active materials having different potentials versus lithium and different impedances, a battery comprising LCO alone as the cathode active material, and a battery comprising LFP alone as the cathode active material.

In the test results, the batteries comprising LCO or LFP alone as the cathode active material showed slightly low interfacial reaction resistance at various applied voltages. On the contrary, it could be seen that the inventive secondary battery, comprising two or more cathode active materials having different potentials versus lithium and different impedances, showed a rapid increase in interfacial reaction resistance at around 3.7V (see FIG. 11). This is thought to be because resistance was increased in abuse conditions, leading to a reduction in current.

Thus, it can be predicted that, in the case of the cathode comprising two or more cathode active materials, when the battery is discharged (for example, short-circuited) at 5C or more, at which there is a difference in impedance between the cathode active materials, the migration rate of large amounts of lithium ions and electrons from the anode to the cathode will be reduced, and thus heat generation caused by the generation of instantaneous overcurrent can be prevented, thus improving the safety of the battery.

### Industrial Applicability

As can be seen from the foregoing, the secondary battery according to the present invention comprises the cathode comprising two or more cathode active materials, which have different potentials versus lithium and different impedances. Thus, when a short circuit occurs in the battery, the instantaneous flow of a large amount of current can be minimized, and the accumulation of heat in the battery can be reduced, thus improving the safety of the battery.

## Claims

1. A cathode comprising two or more lithium-containing metal composite oxides, having different potentials versus lithium (Li/Li⁺) and different impedances, the cathode, comprising:
(a) a first lithium-containing metal composite oxide; and
(b) a second lithium-containing metal composite oxide, which has high impedance and low potential versus lithium (Li/Li⁺), compared to those of the first lithium-containing metal composite oxide,
wherein the cathode has a structure in which the first lithium-containing metal composite oxide and the second lithium-containing metal composite oxide in the cathode are uniformly mixed with each other;
the second lithium-containing metal composite oxide is coated with a conductive material on part or all of the surface thereof;
wherein the second lithium containing metal composite oxide is LiFePO_{4;} and
wherein the electrical conductivity ratio between the first lithium-containing metal composite oxide and the second lithium-containing metal composite oxide is in a range of 10⁻¹ to 10⁻⁷.

2. The cathode of claim 1, wherein the potential versus lithium (Li/Li⁺) of the first lithium-containing metal composite oxide is above 3.7V, and the potential versus lithium (Li/Li⁺) of the second lithium-containing metal composite oxide is below 3.7V.

3. The cathode of claim 1, wherein the difference (ΔP) in the potential versus lithium (Li/Li⁺) between the first lithium-containing metal composite oxide and the second lithium-containing metal composite oxide is 0.3V<ΔP<5V.

4. The cathode of claim 1, wherein the conductive material is a carbon material.

5. The cathode of claim 1, wherein the ratio of weight of the first lithium-containing metal composite oxide to the second lithium-containing metal composite oxide is in a range of 70-95:5-30.

6. The cathode of claim 1, wherein the particle size (D₅₀) of the first lithium-containing metal composite oxide particles is in a range of 5-20 *µ*m, and the particle size (D₅₀) of the second lithium-containing metal composite oxide particles ranges from 50 nm to 10 *µ*m.

7. The cathode of claim 1, wherein the first lithium-containing metal composite oxide is one or more selected from among LiMO₂ (M=Co, Mn, Ni, Ni_{1/3}Co_{1/3}Mn_{1/3}, Cr, or V), and LiMO₄ (M=CoMn, NiV, CoV, CoP, MnP, NiP, or Mn₂).

8. A secondary battery, comprising a cathode, an anode, an electrolyte and a separator, wherein the cathode is the cathode of any one of claims 1 to 7.

9. The secondary battery of claim 8, which is a lithium secondary battery.

## Patentansprüche

1. Kathode, die zwei oder mehrere Lithium-enthaltende Metall-Mischoxide umfasst, die unterschiedliche Potentiale gegenüber Lithium (Li/Li⁺) und unterschiedliche Impedanzen aufweisen, wobei die Kathode folgendes umfasst:
(a) ein erstes Lithium-enthaltendes Metall-Mischoxid; und
(b) ein zweites Lithium-enthaltendes Metall-Mischoxid, das im Vergleich zum ersten Lithium-enthaltenden Metall-Mischoxid eine hohe Impedanz und ein niedriges Potential gegenüber Lithium (Li/Li⁺) aufweist,
wobei die Kathode eine Struktur aufweist, in der das erste Lithium-enthaltende Metall-Mischoxid und das zweite Lithium-enthaltende Metall-Mischoxid in der Kathode gleichförmig miteinander vermischt sind;
das zweite Lithium-enthaltende Metall-Mischoxid auf einem Teil der oder seiner gesamten Oberfläche mit einem leitfähigen Material beschichtet ist;
wobei das zweite Lithium-enthaltende Metall-Mischoxid LiFePO₄ ist; und
wobei das Verhältnis der elektrischen Leitfähigkeit zwischen dem ersten Lithium-enthaltenden Metall-Mischoxid und dem zweiten Lithium-enthaltenden Metall-Mischoxid in einem Bereich von 10⁻¹ bis 10⁻⁷ liegt.

2. Kathode nach Anspruch 1, wobei das Potential des ersten Lithium-enthaltenden Metall-Mischoxids gegenüber Lithium (Li/Li⁺) über 3,7 V liegt und das Potential des zweiten Lithium-enthaltenden Metall-Mischoxids gegenüber Lithium (Li/Li⁺) unter 3,7 V liegt.

3. Kathode nach Anspruch 1, wobei die Differenz (ΔP) des Potentials gegenüber Lithium (Li/Li⁺) zwischen dem ersten Lithium-enthaltenden Metall-Mischoxid und dem zweiten Lithium-enthaltenden Metall-Mischoxid bei 0,3 V < ΔP < 5 V liegt.

4. Kathode nach Anspruch 1, wobei das leitfähige Material ein Kohlenstoffmaterial ist.

5. Kathode nach Anspruch 1, wobei das Gewichtsverhältnis des ersten Lithium-enthaltenden Metall-Mischoxids zum zweiten Lithium-enthaltenden Metall-Mischoxid im Bereich von 70-95:5-30 liegt.

6. Kathode nach Anspruch 1, wobei die Partikelgröße (D₅₀) der Partikel des ersten Lithium-enthaltenden Metall-Mischoxids im Bereich von 5-20 µm liegt und die Partikelgröße (D₅₀) des zweiten Lithium-enthaltenden Metall-Mischoxids von 50 nm bis 10 µm reicht.

7. Kathode nach Anspruch 1, wobei das erste Lithium-enthaltende Metall-Mischoxid aus einem oder mehreren besteht, ausgewählt aus LiMO₂ (M = Co, Mn, Ni_{1/3}Co_{1/3}Mn_{1/3}, Cr oder V) und LiMO₄ (M = CoMn, NiV, CoV, CoP, MnP oder Mn₂).

8. Sekundärbatterie, die eine Kathode, eine Anode, einen Elektrolyten und einen Separator umfasst, wobei die Kathode eine Kathode gemäß einem der Ansprüche 1 bis 7 ist.

9. Sekundärbatterie nach Anspruch 8, die eine Lithium-Sekundärbatterie ist.

## Revendications

1. Cathode comprenant deux oxydes composites métalliques contenant du lithium ou plus, ayant différents potentiels versus le lithium (Li/Li⁺) et différentes impédances, la cathode comprenant :
(a) un premier oxyde composite métallique contenant du lithium ; et
(b) un second oxyde composite métallique contenant du lithium, qui a une impédance élevée et un faible potentiel versus le lithium (Li/Li⁺), comparés à ceux du premier oxyde composite métallique contenant du lithium,
dans laquelle la cathode a une structure dans laquelle le premier oxyde composite métallique contenant du lithium et le second oxyde composite métallique contenant du lithium dans la cathode sont mélangés uniformément l'un avec l'autre ;
le second oxyde composite métallique contenant du lithium est revêtu d'un matériau conducteur sur une partie ou la totalité de sa surface;
dans laquelle le second oxyde composite métallique contenant du lithium est LiFePO₄; et
dans laquelle le rapport de conductivité électrique entre le premier oxyde composite métallique contenant du lithium et le second oxyde composite métallique contenant du lithium se situe dans une plage de 10⁻¹ à 10⁻⁷.

2. Cathode selon la revendication 1, dans laquelle le potentiel versus le lithium (Li/Li⁺) du premier oxyde composite métallique contenant du lithium est supérieur à 3,7 V, et le potentiel versus le lithium (Li/Li⁺) du second oxyde composite métallique contenant du lithium est inférieur à 3,7 V.

3. Cathode selon la revendication 1, dans laquelle la différence (ΔP) de potentiel versus le lithium (Li/Li⁺) entre le premier oxyde composite métallique contenant du lithium et le second oxyde composite métallique contenant du lithium est de 0,3 V < ΔP < 5 V.

4. Cathode selon la revendication 1, dans laquelle le matériau conducteur est une matière carbonée.

5. Cathode selon la revendication 1, dans laquelle le rapport en poids du premier oxyde composite métallique contenant du lithium au second oxyde composite métallique contenant du lithium se situe dans une plage de 70-95 : 5-30.

6. Cathode selon la revendication 1, dans laquelle la taille de particule (D₅₀) des particules du premier oxyde composite métallique contenant du lithium se situe dans une plage de 5-20 µm, et la taille de particule (D₅₀) des particules du second oxyde composite métallique contenant du lithium se situe dans une plage de 50 nm à 10 µm.

7. Cathode selon la revendication 1, dans laquelle le premier oxyde composite métallique contenant du lithium est un ou plusieurs choisis parmi LiMO₂ (M=Co, Mn, Ni, Ni_{1/3}Co_{1/3}Mn_{1/3}, Cr ou V) et LiMO₄ (M=CoMn, NiV, CoV, CoP, MnP, NiP ou Mn₂).

8. Batterie secondaire, comprenant une cathode, une anode, un électrolyte et un séparateur, dans laquelle la cathode est la cathode selon l'une quelconque des revendications 1 à 7.

9. Batterie secondaire selon la revendication 8, qui est une batterie secondaire au lithium.
